# EUROPEAN PATENT APPLICATION

(11) **EP 0 631 267 A1**
(43) Date of publication of application: **28.12.1994**
(21) Application number: 94830304.5
(22) Date of filing: 22.06.1994
(51) Int. Cl.: G08G 1/00, G08G 1/16, B60Q 1/52

(54) **A hasard warning device for motor vehicles**

(30) Priority: 24.06.1993 IT BO930295
(71) Applicant: Magagnini, Adolfo, I-40043 Marzabotto (Bologna) (IT); Magagnini, Marco, I-40043 Marzabotto (Bologna) (IT)
(72) Inventor: Magagnini, Adolfo, I-40043 Marzabotto (Bologna) (IT); Magagnini, Marco, I-40043 Marzabotto (Bologna) (IT)
(74) Representative: Lanzoni, Luciano

(57) **Abstract**

A hazard signalling device for motor vehicles comprises: a sensor (1) of mechanical phenomena deriving from sudden changes in speed and unusual inclinations of a vehicle which exceed a prefixed degree, and which provide in output an electrical signal (E) on sensing such phenomena; a transmitter (2) for transmitting a radio-signal linked to the sensor (1); a receiver (3) for receiving a signal, acting on a same channel as a transmission channel used by the transmitter (2); a signaller (4) linked to at least the receiver (3) and being activated together with said receiver (3); an automatic commutator (5) which, on a command received from the sensor (1) switch the device from a first, stand-by configuration wherein the receiver (3) is activated into a second, alarm configuration wherein the transmitter (2) is activated.

## Description

The invention relates to a hazard warning device for motor vehicles.

More precisely, the invention relates to the field of road accident or hazard signalling devices. In the field of road safety much has been done in the attempt to provide timely means for communicating hazard warning to road users. Obviously the principal hazard is an actual accident, but attention has also been paid to other dangers such as sudden hold-ups, bottlenecks and other situations leading to safety risks.

Known-type signalling systems generally comprise a first transmitting unit, provided with or associated to manual activating means or danger sensing means, and a second unit for receiving signals from the first unit through a transmission channel. Frequently the receiver and transmitter are united in a single apparatus so that both needs can be served.

Obviously the prior art offers many configurations of the above components. In some cases systems have been provided wherein the transmitting and receiving units are localized, the first at important points on a road and the second on board a vehicle, such that vehicles approaching a black spot can be advised as to viability.

Other solutions propose on-board systems whereby vehicles can communicate with each other. One such invention is disclosed in US 3,876,940 wherein one vehicle (normally a road salvage and/or first aid vehicle) emits an alarm signal, while the receiving set is in fact none other than a normal car radio.

In another solution, disclosed in DE 3,535,833, a vehicle can identify the position and direction of a first aid or salvage vehicle thanks to a recognition system whereby the latter vehicle emits a signal which the former is able to pinpoint exactly using a technique based on the classic four cardinal points of the compass.

US 3,997,868, like the above-mentioned publication, provides means for determining the direction of approach of a first aid or salvage vehicle.

US 4,764,978 provides a system where the approach of an aid vehicle is signalled to other road users by interrupting the car radios in the interested area.

While all of these solutions address the problem of signalling a hazard, none of them solves the question of identifying a hazard.

Another solution proposes a system wherein a plurality of microswitches positioned at various points in a vehicle act on a hazard signalling circuit connected to a radio transmission set. A drawback of this system is that in order for a hazard signal to be emitted, the vehicle has to suffer an impact at a position corresponding to that of one of the switches.

The present invention intends to overcome the above-described drawbacks by providing effective signalling of a hazardous situation through a device able to emit a radio alarm signal both automatically, stimulated by sudden drops in speed or unusual inclination of the vehicle, and manually, when a user has seen a possibly dangerous situation.

The invention would be mounted on all user vehicles and solves the problem of efficient signalling of dangerous situations by providing a signalling device for motor vehicles, characterised in that it comprises:
- sensor means of mechanical phenomena deriving from sudden changes in speed and unusual inclinations of a vehicle;
- means for transmitting a radio-signal linked to the sensor means;
- means for receiving a signal, acting on a same channel as a transmission channel used by the means for transmitting;
- means for signalling linked to at least the means for receiving;
- means for commutating which, on a command received from the sensor means switch the device from a first configuration wherein the receiving means are activated into a second configuration wherein the transmission means are activated.

The aim of the device is to enable a first vehicle which finds itself in a situation of danger due to sudden deceleration or tilting out of normal parameters to signal such an event to other vehicles fitted with the device, so that users are aware and can take preventive action well before, as often happens, it becomes too late to do so.

Further characteristics and advantages of the present invention will better emerge from the detailed description that follows, of a preferred but non-exclusive embodiment here illustrated in the form of a non-limiting example in the accompanying drawings, in which:
- figure 1 is a block diagram showing a possible embodiment of the invention;
- figures 2a, 2b and 2c show a possible embodiment of sensor means in three configurations corresponding to different possible vehicle situations.

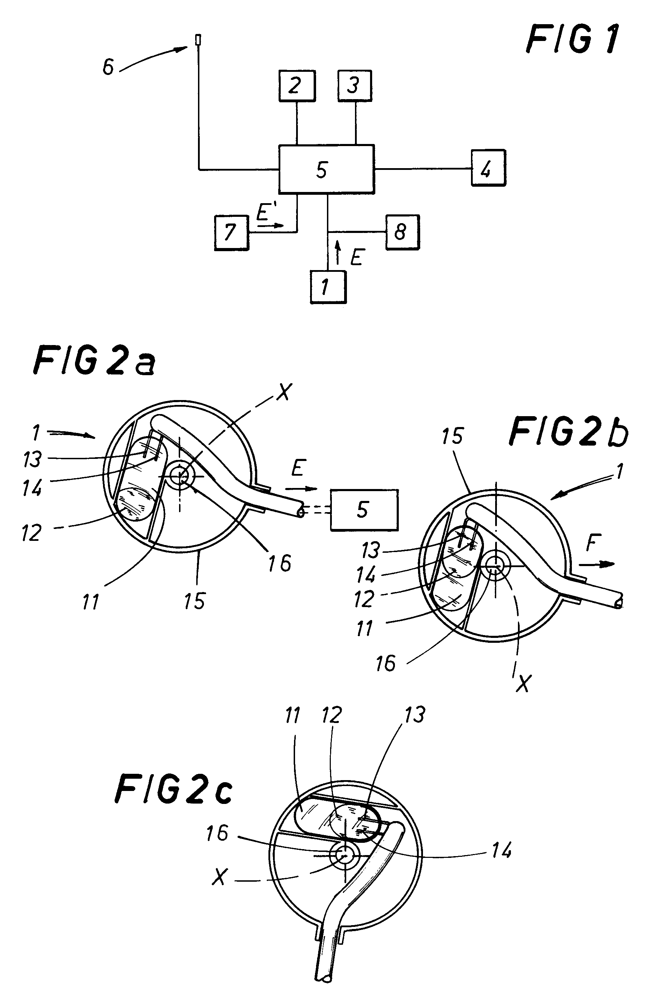

Since the transmission and receiving devices are of known type, the following description will concentrate on the sensor system of the invention. With particular reference to figure 1, a hazard sensor according to the present invention comprises a sensor 1 especially adapted to sensing mechanical alterations due to sudden velocity changes and changes in inclination of a vehicle, where such changes exceed prefixed values.

The device is also provided with a radio transmitter 2 linked to the sensor 1, as well as a receiver 3 of a signal acting on a same transmission channel as the transmitter 2.

A signaller 4 is linked at least to the receiver 3. Also provided is an automatic commutator 5 which transfers a received signal into a transmission signal by changing the device from a first configuration, in which the receiver 3 is activated, into a second configuration, in which the transmitter 2 is activated.

Obviously the embodiment described herein is intended purely as an example: the single components of the invention as described could be variously positioned.

Figure 2a shows how the sensor 1 can be contained in an insulated container 11, which might be a glass ampoule, and which contains a liquid-state conductor 12, for example mercury, having a smaller volume than the total internal volume of the container 11.

The container 11 is directly or indirectly associated to the vehicle through a support 15 fixable to a part of the vehicle, or at least to a part which is solid to the vehicle.

The support 15 is provided with a fixing organ, schematized in the form of a through-hole 16, which permits of stably positioning the container 11 at different angles with respect to a horizontal axis X, so that the container 11 can be tilted according to the prefixed values.

In the upper portion the container 11 is provided with clamps or connection poles for the two ends 13, 14 of an open circuit interacting with at least the transmitter 2.

The poles or conducting portions connected to the poles extend internally of the container 11 into a zone of said container 11 which is opposite to the portion occupied by the conductor 12 (due to force of gravity). Thus, when the conductor 12 shifts above a certain prefixed gradient due to vehicle tilting, the circuit will be closed.

Figures 2a, 2b and 2c show how the container 11 can be arranged in a slightly inclined position, with an angle that can be varied according to whatever intensity of deceleration is considered to be so hazardous as to require activation of the device.

Insertion of the ignition key into its slot closes a circuit (of known type and not described herein) and the device passes into a stand-by configuration, wherein the receiver 3 is activated to pick up, by means of an antenna 6, signals emitted by other devices of the same type mounted on other vehicles. At the same time the circuits linking the various components are set in tension: this is done in a known way and is therefore not herein described in detail.

Should the vehicle be subjected to sharp deceleration in the direction indicated by F in figure 2b, the conductor 12 is displaced from the lower zone it occupies through force of gravity, into an upper zone, where it constitutes an electrical connection between the two clamps or poles 13 and 14.

A first circuit (which is open at the clamps 13 and 14) is closed by this connection, and provides an electric signal E directly to the block 5 which activates the transmitter 2 to send a signal through the antenna 6 to the receivers 3 on like devices mounted on other vehicles travelling in the same area as the affected vehicle.

Obviously the emitted signal is in code and the received signal has to be decodified, such that other radio transmissions are not interrupted.

The alarm signal received by the device of the invention will activate the signaller 4 which can be a circuit linked to optical and/or acoustic devices such as lights, buzzers and the like specially arranged in a panel in the vehicle.

The signaller 4 can be connected to a typical car radio in order that a programme can be interrupted by a sound signal passing through the loudspeakers.

The signaller 4 comprises at least a second circuit provided with a know-type timer 8 interacting between the sensor 1 and the transmitter 2. This second circuit is activated when the first circuit is closed, and times the duration of the radio signal emitted by the transmitter 2.

A similar timed circuit can be provided to establish the duration of the visual and acoustic signals emitted inside the car.

Manual activation means 7 are provided for activating the transmitter 2, and are arranged in parallel to the sensor 1: they might take the form of a button which when pressed emits an electric signal E' activating in turn the radio signal.

The transmitter 2 and the receiver 3 can both be associated to a same antenna 6 which both sends out and picks up signals: a different arrangement of the transmitter 2 and the receiver 3 can be used, as long as their functioning is the same as that described herein.

Obviously, in order for the device to be fully effective it would have to be mounted on all road-using vehicles, and would therefore have to be obligatory under law.

## Claims

1. A hazard signalling device for motor vehicles, characterised in that it comprises:
- a sensor (1) of mechanical phenomena deriving from sudden changes in speed and unusual inclinations of a vehicle which exceed a prefixed degree, and which provide in output an electrical signal (E) on sensing such phenomena;
- a transmitter (2) for transmitting a radio-signal linked to the sensor (1);
- a receiver (3) for receiving a signal, acting on a same channel as a transmission channel used by the transmitter (2);
- a signaller (4) linked to at least the receiver (3) and being activated together with said receiver (3);
- an automatic commutator (5) which, on a command received from the sensor (1) switch the device from a first, stand-by configuration wherein the receiver (3) is activated into a second, alarm configuration wherein the transmitter (2) is activated.

2. A hazard signalling device for motor vehicles as in claim 1, characterised in that the sensor (1) is constituted by at least one insulated container (11) containing a liquid-state conductor (12) having a smaller volume than a volume of the container (11); the conductor (11) being provided at an upper zone with two poles, each of which is connected to an end (13, 14) of an open circuit interacting with at least the transmitter (2), said poles extending inside the container (11) in an opposite. zone to a zone occupied by the conductor (12) through force of gravity, such that when the conductor (12) is displaced internally of the container (11) to an extent exceeding a prefixed extent, the first circuit is closed.

3. A hazard signalling device for vehicles as in claim 2, characterised in that the container (11) is associated to the vehicle by means of a support (15) which is mechanically solid to the vehicle through a fixing organ permitting of stably positioning the container (11) at various angles with respect to a horizontal axis (X) such that the container (11) can be inclined according to prefixed values.

4. A hazard signalling device for vehicles as in claim 2, characterised in that it comprises at least a second circuit provided with a timer (8) interacting between the sensor (1) and the transmitter (2) and activatable on closure of the first circuit to determine a duration of an emission of a radio signal by the transmitter (2).

5. A hazard signalling device for vehicles as in claim 1, characterised in that it is provided with manual activating means arranged in parallel to to the sensor (1) and activating a radio signal independently of the sensor (1).

6. A hazard signalling device for vehicles as in claim 1, characterised in that the signaller (4) comprise a third circuit connected to visual and/or acoustic signals.

7. A hazard signalling device for vehicle as in claim 1, characterised in that the transmitter (2) and the receiver (3) are associated to a same antenna (6) able both to send and to pick up signals.
